# EUROPEAN PATENT APPLICATION

(11) **EP 3 846 323 A1**
(43) Date of publication of application: **07.07.2021**
(21) Application number: 19855767.0
(22) Date of filing: 20.06.2019
(51) Int. Cl.: H02K 15/02, H02K 1/02, H02K 1/18, H02K 15/095

(54) **METHOD OF MANUFACTURING STATOR, STATOR, AND MOTOR**

(30) Priority: 28.08.2018 JP 2018159158
(71) Applicant: Panasonic Intellectual Property Management Co., Ltd., Osaka-shi, Osaka 540-6207 (JP)
(72) Inventor: NISHIKAWA Yukio, Osaka 540-6207 (JP); SAITOH Mitsuo, Osaka 540-6207 (JP); NOJIRI Naoki, Osaka 540-6207 (JP)
(74) Representative: Vigand, Philippe
(86) International application number: PCT/JP2019/024579
(87) International publication number: WO 2020/044745

(57) **Abstract**

There is provided a method of manufacturing a stator, including: an adjustment step of adjusting a thickness of a laminated body including a laminated group of soft magnetic alloy strips containing, in whole or in part, soft magnetic alloy strips obtained by heat-treating amorphous alloy strips and metal plates, the metal plates sandwiching the laminated group; a winding step of fastening the laminated body to a base and performing winding at a predetermined prat of the laminated body in a laminating direction; a removal step of releasing the fastening of the laminated body to the base and removing foreign matters from an end surface of the laminated body; and a fastening step of fastening the laminated body to the base again.

## Description

### TECHNICAL FIELD

The present disclosure relates to a method of manufacturing a stator in which soft magnetic alloy strips are laminated, a stator, and a motor.

### BACKGROUND ART

In the related art, pure iron or electromagnetic steel sheet is generally used for a stator of a motor. In the motor for the purpose of improving efficiency, there is a motor in which a stator core is configured of strips containing amorphous or nanocrystal grains (for example, refer to Patent Literature 1).

The stator core of Patent Literature 1 is manufactured by the following steps.

First, an amorphous alloy strip produced by a liquid quenching method such as a single roll method or a double roll method is processed into a predetermined shape by winding, cutting, punching, etching or the like.

Next, in order to improve the soft magnetic properties of the alloy strips, the amorphous alloy strips are heat-treated and crystallized. Accordingly, soft magnetic alloy strips containing nanocrystal grains are produced.

Next, a plurality of soft magnetic alloy strips are laminated to make a stator core. At this time, the stator core is bonded or molded with resin.

The stator core produced by the above steps is used for a motor.

### Citation List

### Patent Literature

PTL 1: Japanese Patent Unexamined Publication No. 6-145917

### SUMMARY OF THE INVENTION

However, the motor of Patent Literature 1 has a problem that the space factor becomes small and the efficiency becomes poor because the resin or the adhesive enters between layers of the alloy strips from the side surface.

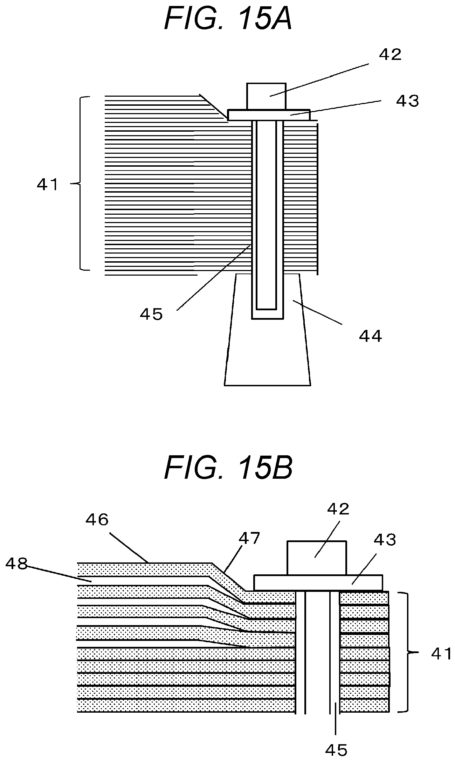

In order to increase the space factor, a laminated body of only soft magnetic alloy strips may be firmly fastened with bolts. However, there is a problem in this case. Hereinafter, this problem will be described in detail with reference to FIGS. 15A to 15C.

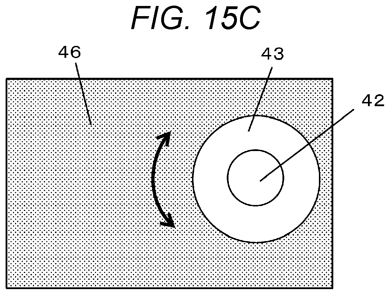

FIGS. 15A to 15C illustrate the vicinity of a fastener (a part where bolt 42 is provided) of the laminated body of the soft magnetic alloy strips. FIG. 15A is a sectional view of the vicinity of the fastener. FIG. 15B is a partially enlarged sectional view of the vicinity of the fastener illustrated in FIG. 15A. FIG. 15C is a top view of the vicinity of the fastener illustrated in FIG. 15B.

As illustrated in FIG. 15A, laminated group 41 of the soft magnetic alloy strips is fixed by bolt 42. Bolt 42 is fastened to leg 44 of a base passing through washer 43 and through-hole 45. After fastening bolt 42, as illustrated in FIG. 15B, soft magnetic alloy strip 46 basically adheres tightly without a gap in a laminating direction (vertical direction in the drawing).

However, as illustrated in FIG. 15B, in a place where washer 43 is not restrained, soft magnetic alloy strip 46 has low rigidity and therefore tends to form gap 48 and widen. At this time, deformed part 47 is generated in soft magnetic alloy strip 46 around washer 43. The swelling caused by deformed part 47 becomes larger toward the end of laminated group 41 of the soft magnetic alloy strips in the laminating direction.

Further, as illustrated in FIG. 15C, the rotational force of washer 43 when bolt 42 is fastened causes twisting of soft magnetic alloy strip 46 in the direction of the arrow in the drawing.

When the degree of swelling or twisting described above exceeds the limit of breakage of soft magnetic alloy strip 46, a damage such as breakage occurs in soft magnetic alloy strip 46. When damage occurs, a magnetic path during driving becomes discontinuous, unlike the design. As a result, the magnetic characteristics deteriorate. Furthermore, debris generated by the damage enters a rotating part, which impairs the driving of the motor.

An object of one aspect of the present disclosure is to provide a method of manufacturing a stator, a stator, and a motor that can ensure the characteristics and reliability of the motor.

According to one aspect of the present disclosure, there is provided a method of manufacturing a stator, including: an adjustment step of adjusting a thickness of a laminated body including a laminated group of soft magnetic alloy strips containing, in whole or in part, the soft magnetic alloy strips obtained by heat-treating amorphous alloy strips and metal plates, the metal plates sandwiching the laminated group; a winding step of fastening the laminated body to a base and performing winding at a predetermined position of the laminated body in a laminating direction; a removal step of releasing the fastening of the laminated body to the base and removing foreign matters from an end surface of the laminated body; and a fastening step of fastening the laminated body to the base again.

According to another aspect of the present disclosure, there is provided a stator including: a laminated group of soft magnetic alloy strips containing, in whole or in part, soft magnetic alloy strips obtained by heat-treating amorphous alloy strips; metal plates that sandwich the laminated group; a winding wound in a laminating direction at a predetermined position of the laminated body including the laminated group and the metal plates; a base that holds the laminated body; and a fastening mechanism that penetrates the laminated body in the laminating direction and fastens the base and the laminated body.

The motor according to one aspect of the present disclosure includes: a stator according to one aspect of the present disclosure; and a rotor.

According to the present disclosure, the characteristics and reliability of the motor can be ensured.

### BRIEF DESCRIPTION OF DRAWINGS

FIG. 1A is a side view of a stator according to a first exemplary embodiment.
FIG. 1B is a top view of FIG. 1A.
FIG. 2 is a flow chart illustrating an outline of a manufacturing process of the stator according to the first exemplary embodiment.
FIG. 3A is a side view of the stator during the adjustment step according to the first exemplary embodiment.
FIG. 3B is a top view of FIG. 3A.
FIG. 4A is a side view of the stator having a large thickness in a laminated body according to the first exemplary embodiment.
FIG. 4B is a side view of the stator having a small thickness in the laminated body according to the first exemplary embodiment.
FIG. 5 is a partial sectional view of a laminated group of soft magnetic alloy strips before a bolt is fastened according to the first exemplary embodiment.
FIG. 6A is a side view of the stator after releasing the fastening according to the first exemplary embodiment.
FIG. 6B is a top view of FIG. 6A.
FIG. 7A is a front view illustrating an example of a part of an end surface of the laminated group of the soft magnetic alloy strips after a fastening step according to the first exemplary embodiment.
FIG. 7B is a sectional view of FIG. 7A.
FIG. 8 is a sectional view illustrating an example of a part of the end surface of the laminated group of the soft magnetic alloy strips after the fastening step according to the first exemplary embodiment.
FIG. 9 is a sectional view illustrating an example of a part of the end surface of the laminated group of the soft magnetic alloy strips after the fastening step according to the first exemplary embodiment.
FIG. 10 is a sectional view illustrating an example of a part of the end surface of the laminated group of the soft magnetic alloy strips after the fastening step according to the first exemplary embodiment.
FIG. 11A is a front view illustrating an example of a part of the end surface of the laminated group of the soft magnetic alloy strips after the fastening step according to the first exemplary embodiment.
FIG. 11B is a sectional view of FIG. 11A.
FIG. 12A is a side view of a motor using the stator according to the first exemplary embodiment.
FIG. 12B is a top view of FIG. 12A.
FIG. 13A is a side view of a motor using a stator according to a second exemplary embodiment.
FIG. 13B is a top view of FIG. 13A.
FIG. 14A is a front view of the vicinity of a fastener of the stator according to the second exemplary embodiment.
FIG. 14B is a sectional view of FIG. 14A.
FIG. 15A is a sectional view of the vicinity of a fastener of a laminated body of soft magnetic alloy strips in the related art.
FIG. 15B is a partially enlarged sectional view of FIG. 15A.
FIG. 15C is a top view of FIG. 15B.

### DESCRIPTION OF EMBODIMENTS

Hereinafter, each embodiment of the present disclosure will be described with reference to the drawings. In each drawing, common configuration elements will be given the same reference numerals, and the description thereof will be appropriately omitted.

### (First Exemplary Embodiment)

A first exemplary embodiment according to the present disclosure will be described.

### <Structure of Stator>

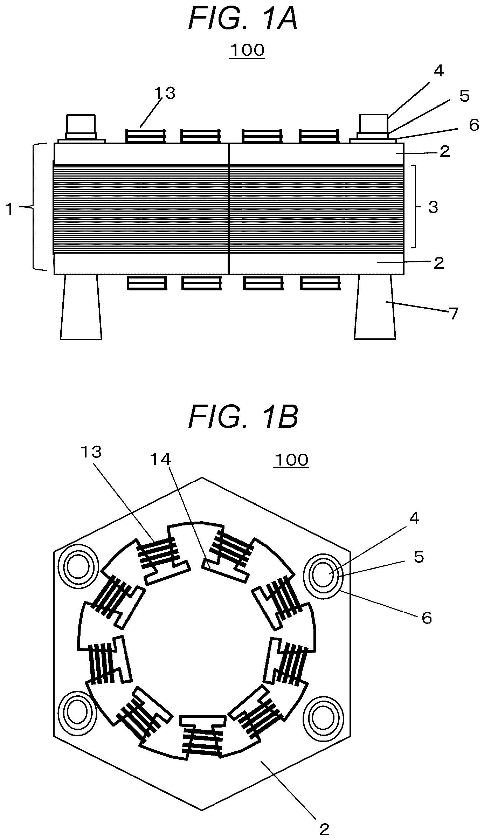

A structure of stator 100 according to the exemplary embodiment will be described with reference to FIGS. 1A and 1B. FIG. 1A is a side view of stator 100 according to the first exemplary embodiment. FIG. 1B is a top view of FIG. 1A.

As illustrated in FIG. 1A, laminated body 1 is formed by sandwiching laminated group 3 of soft magnetic alloy strips with electromagnetic steel sheets 2 (an example of a metal plate).

As illustrated in FIG. 1B, winding 13 is provided so as to wind an insulated copper wire at a predetermined position of teeth 14 and tighten laminated body 1 in the laminating direction.

As illustrated in FIGS. 1A and 1B, in stator 100, laminated body 1 provided with winding 13 is fixed by bolt 4. Bolt 4 is inserted into through-holes (not illustrated) of spring washer 5, washer 6, and laminated body 1, and is fastened to leg 7 of the base. The number of bolts 4 is, for example, four. Further, legs 7 of the base may be simply referred to as a "base".

### <Manufacturing Process of Stator>

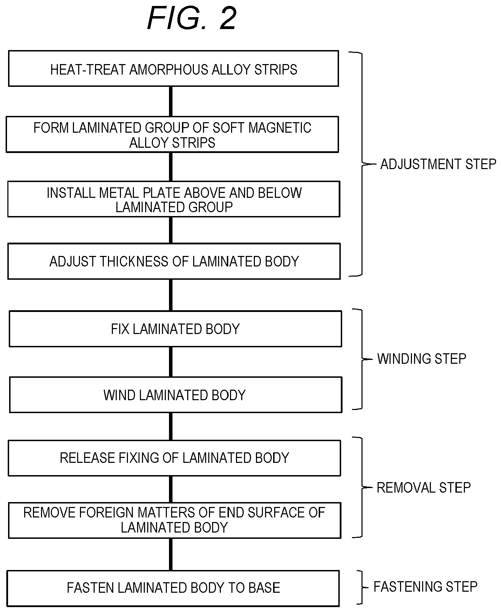

A manufacturing process of stator 100 illustrated in FIGS. 1A and 1B will be described with reference to FIG. 2. FIG. 2 is a flow chart illustrating an outline of the manufacturing process of stator 100.

As illustrated in FIG. 2, the flow includes an adjustment step, a winding step, a removal step, and a fastening step. The outline of each step will be described below.

The adjustment step is a step of adjusting the thickness of laminated body 1. In this adjustment step, first, the amorphous alloy strips are heat-treated to form soft magnetic alloy strips. Next, laminated group 3 of the soft magnetic alloy strips containing, in whole or in part, the soft magnetic alloy strips is formed. Next, electromagnetic steel sheets 2 are provided above and below (upper and lower sides in the drawing) of laminated group 3 of the soft magnetic alloy strips to form laminated body 1. Next, the number of soft magnetic alloy strips is increased or decreased to adjust the thickness of laminated body 1 to a desired thickness. Details will be described below.

In the winding step, first, laminated body 1 of which the thickness has been adjusted in the adjustment step is fixed to legs 7 of the base by using a fastening mechanism (for example, bolt 4, spring washer 5, washer 6, and the like). Specifically, as described above, bolt 4 is inserted into the through-hole (not illustrated) of spring washer 5, washer 6, and laminated body 1 and fastened to leg 7 of the base. Next, winding is performed in the laminating direction of fixed laminated body 1. Specifically, as described above, the copper wire is wound around teeth 14 at a predetermined position, and laminated body 1 is tightened in the laminating direction.

In the removal step, first, bolt 4 is removed to release the fixing of laminated body 1. Next, foreign matters (for example, powder or fragments) adhering to the end surface of laminated body 1 is removed.

In the fastening step, laminated body 1 of which the foreign matters are removed is fixed again to legs 7 of the base by using a fastening mechanism (for example, bolt 4, spring washer 5, washer 6, and the like). Specifically, similar to the winding step, bolt 4 is inserted into the through-hole (not illustrated) of spring washer 5, washer 6, and laminated body 1 and fastened to leg 7 of the base. Therefore, the fastening step may be referred to as a "refixing step".

The outline of each step has been described above. In the following, the adjustment step, the removal step, and the fastening step will be described in more detail.

### <Adjustment Step>

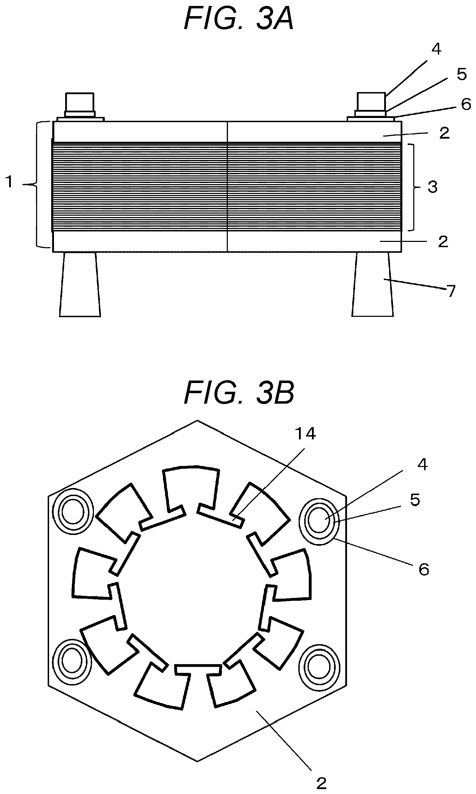

The adjustment step will be described with reference to FIGS. 3A and 3B. FIG. 3A is a side view of stator 100 during the adjustment step. FIG. 3B is a top view of FIG. 3A. FIGS. 3A and 3B are different from FIGS. 1A and 1B in that winding 13 is not provided.

As described above, in the adjustment step, the soft magnetic amorphous alloy strips are heat-treated and then laminated to form laminated group 3 of the soft magnetic alloy strips, as illustrated in FIG. 3A. After laminating the soft magnetic amorphous alloy strips to form laminated group 3 of the soft magnetic alloy strips, laminated group 3 of the soft magnetic alloy strips is heat-treated, and accordingly, the laminated group 3 of the soft magnetic alloy strips illustrated in FIG. 3A may be formed.

Laminated group 3 of the soft magnetic alloy strips is configured of the soft magnetic alloy strips in all or a part thereof. In a case where laminated group 3 of the soft magnetic alloy strips contains the soft magnetic alloy strips in a part thereof, the rest may contain the amorphous strips that are not heat-treated.

Further, as described above, in the adjustment step, the upper and lower sides of laminated group 3 of the soft magnetic alloy strips are sandwiched between electromagnetic steel sheets 2 to form laminated body 1. Bolt 4 is inserted into each of spring washer 5, washer 6, and laminated body 1 in the laminating direction, and is fastened to leg 7 of the base with a preset fastening force.

At this time, a deformed part is generated in the soft magnetic alloy strips in the vicinity of the fastener (a part where bolt 4 is provided) as described with reference to FIG. 15B. Accordingly, the thickness (hereinafter, referred to as the laminated thickness) of laminated body 1 in the vicinity of spring washer 5 and washer 6 becomes small, and the laminated thickness other than in the vicinity of spring washer 5 and washer 6 becomes large.

Further, in a case where only the parts where the plate thickness of the soft magnetic alloy strips is small are laminated, the laminated thickness becomes small.

### <Laminated Thickness>

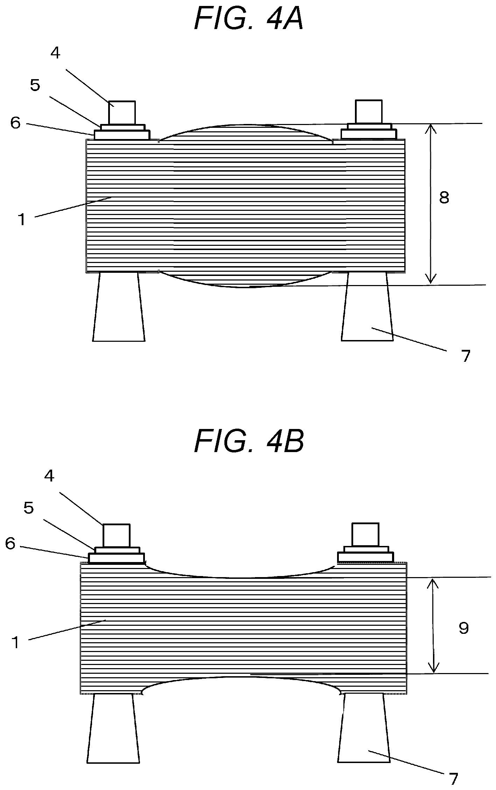

Here, a case where the laminated thickness becomes large and a case where the laminated thickness becomes small will be described with reference to FIGS. 4A and 4B. FIG. 4A is a side view of a stator having a large laminated thickness, and FIG. 4B is a side view of a stator having a small laminated thickness.

As illustrated in FIG. 4A, maximum laminated thickness part 8 is generated in the vicinity of the middle of two bolts 4.

As illustrated in FIG. 4B, there are many cases where minimum laminated thickness part 9 generated by laminating the parts where the plate thickness of the soft magnetic alloy strip is small is also generated in the vicinity of the middle of two bolts 4. However, since the distribution of the plate thickness of the soft magnetic alloy strip should also be considered, the place where minimum laminated thickness part 9 is generated is not always determined.

Further, the amount of increase or decrease in laminated thickness is not necessarily the same above and below laminated body 1. When the difference between the amounts between the upper and lower sides is large, the accuracy of the appearance dimensions of the stator will deteriorate, and thus, the accuracy of assembling the motor will also deteriorate.

Further, in a case where the laminated thickness is large, when the gap between the soft magnetic alloy strips is large, the soft magnetic alloy strips that have been heat-treated and become brittle are present so as to be floating alone. Therefore, there is also a problem that the soft magnetic alloy strips are easily damaged.

Such a change in the laminated thickness can be suppressed by the rigidity of electromagnetic steel sheets 2 provided above and below laminated group 3 of the soft magnetic alloy strips.

Since the plate thickness of electromagnetic steel sheet 2 is limited, in a case where the rigidity or strength of only one electromagnetic steel sheet 2 is insufficient, a plurality of electromagnetic steel sheets 2 may be laminated.

Further, another metal plate may be used instead of electromagnetic steel sheet 2. However, a soft magnetic metal plate is preferable. In a case where a metal plate other than the soft magnetic metal plate is used, the copper loss becomes large as the winding length becomes long, and the motor efficiency deteriorates.

In general, when producing the stator, the specification of the laminated thickness is within plus or minus several %. Further, by making the gap between the soft magnetic alloy strips to several pm or less, damage to the soft magnetic alloy strips after the heat treatment is prevented. Therefore, it is desirable that the change in the laminated thickness is within plus or minus 10%.

In order to keep the laminated thickness within plus or minus 10% of the preset specification value, for example, with respect to laminated body 1 illustrated in FIG. 4A or 4B, the laminated thickness is adjusted by repeating selection, combination, and increase and decrease of soft magnetic alloy strips having a different plate thickness distribution.

### <Space Factor>

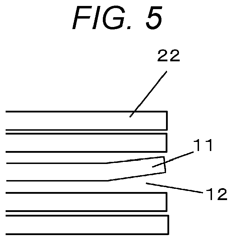

The above-described problem in adjusting the laminated thickness will be described with reference to FIG. 5. FIG. 5 is a partial sectional view of laminated group 3 of the soft magnetic alloy strips during the adjustment of the laminated thickness and before bolt 4 is fastened.

When bolt 4 is loosely tightened, there is a case where gap 12 remains between the layers of soft magnetic alloy strips 22, and end portion 11 of soft magnetic alloy strips is deformed and damaged. Accordingly, gap 12 is made as small as possible to prevent end portion 11 from being deformed due to vertical movement or displacement of soft magnetic alloy strips 22.

Although necessary fastening force depends on the type of stator, the fastening force of bolt 4 needs to be 5 N ·m or more in order not to cause vertical movement or displacement. In order to improve the motor characteristics, it is necessary to increase the space factor, which is the proportion of soft magnetic alloy strips 22 occupying laminated group 3 of the soft magnetic alloy strips.

The space factor was 77 to 85% in the steps of the related art, but was improved to 83 to 99% in the removal step and the fastening step of the present exemplary embodiment.

The reason why the space factor does not reach 100% is considered that the plate thickness of soft magnetic alloy strip 22 is not constant over the entire surface, a gap is generated between soft magnetic alloy strips 22, soft magnetic alloy strip 22 is chipped, and a part where soft magnetic alloy strip 22 is not present is generated within the dimensional specifications of stator 100.

Laminated body 1 of which the thickness has been adjusted in the adjustment step as described above is fixed to legs 7 of the base by bolts 4 with a predetermined fastening force in the next winding step. Then, as illustrated in FIGS. 1A and 1B, winding 13 is wound around teeth 14 at a predetermined position, and laminated body 1 is tightened in the laminating direction.

### <Removal Step>

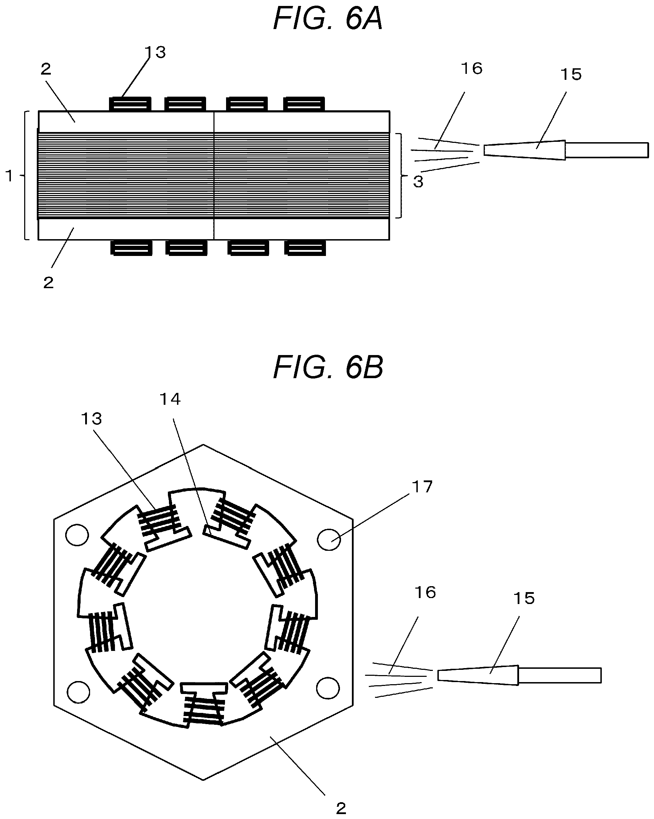

The removal step will be described with reference to FIGS. 6A and 6B. FIG. 6A is a side view of the stator after the winding step. FIG. 6B is a top view of FIG. 6A.

In the removal step, first, as illustrated in FIGS. 6A and 6B, all bolts 4 (refer to FIG. 3A) are removed, and laminated body 1 is removed from leg 7 of the base (refer to FIG. 3A). Accordingly, the fixing of laminated body 1 is released. Even when the fastening by bolt 4 is released, laminated body 1 is not disassembled because laminated body 1 is tightened by winding 13.

Next, as illustrated in FIG. 6A, air 16 is blown from nozzle 15 to the end surface (outer peripheral surface) of laminated group 3 of the soft magnetic alloy strips at a predetermined pressure. Further, air 16 is blown not only to the end surface of laminated group 3 of the soft magnetic alloy strips, but also to the surface on the inner diameter side and the end surface of teeth 14 on which winding 13 is applied. Accordingly, foreign matters (for example, powder or fragments) that are present on the surface of stator 100 or between the layers of soft magnetic alloy strip 22 can be removed. The vicinity of fastening hole 17 illustrated in FIG. 6B is a place where the stress generated at the time of fastening is large and foreign matters are particularly likely to be generated.

Since the tightening force is lost in the vicinity of fastening hole 17, between the layers of the soft magnetic alloy strip in the vicinity of fastening hole 17 are slightly opened. Accordingly, even when there are foreign matters between the layers, it is easier to remove the foreign matters than when bolt 4 is fastened.

There are no particular restrictions on the method of removing the foreign matters. However, in the contact-type removal method using a brush or the like, there is a concern that the brush or the like may peel off and remain as a foreign matter on the stator side. Accordingly, a non-contact removal method such as blowing air 16 described above is preferable.

Non-contact removal methods other than blowing air 16 include, for example, a removal method using air suction and a removal method using magnet suction. Since the powder or fragments are minute and small in quantity, the rate of decrease in the space factor of the stator after the removal step was 1% or less, and the space factor number hardly changed significantly.

### <Fastening Step>

The fastening step is the same as the fastening step of bolt 4 in the above-described adjustment step. In other words, bolt 4 is inserted into each of spring washer 5, washer 6, and laminated body 1 in the laminating direction, and is fastened to leg 7 of the base with a preset fastening force. Accordingly, the production of stator 100 illustrated in FIGS. 1A and 1B is completed.

Since tightening is performed with a preset fastening force in the adjustment step and foreign matters are removed in the removal step, the possibility that new foreign matters are present in stator 100 after the fastening step is low.

After the fastening step, a step of removing the foreign matters from the end surface of laminated body 1 may be performed again. However, in this case, the fixing of laminated body 1 is not released.

Further, even before the winding step, a step of removing the foreign matters from the end surface of laminated body 1 may be performed. In this case, the foreign matters that are present in the vicinity of winding 13 can be removed more reliably.

### <State of End Surface of Laminated Group>

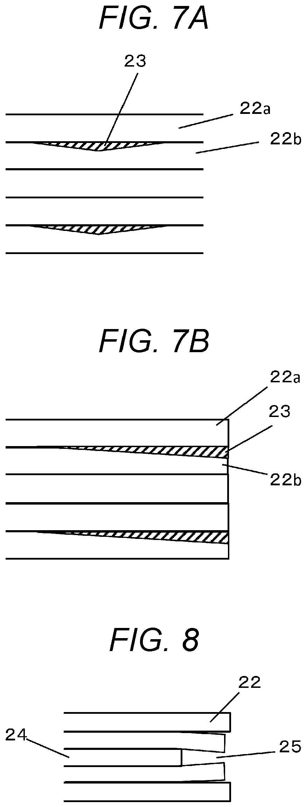

The state of the end surface of laminated group 3 of the soft magnetic alloy strips after the fastening step will be described in detail. FIG. 7A is a front view illustrating an example of a part of the end surface of laminated group 3 of the soft magnetic alloy strips after the fastening step. FIG. 7B is a sectional view of FIG. 7A.

As illustrated in FIGS. 7A and 7B, in a case where soft magnetic alloy strip 22a having a substantially uniform plate thickness and soft magnetic alloy strip 22b having a thin part in the plate thickness are laminated, gap 23 is generated between the layers. Although not illustrated, a gap may be similarly generated even in a case where soft magnetic alloy strip 22a having a substantially uniform plate thickness and soft magnetic alloy strip having a part with a thick plate thickness are laminated. In general, there are many cases where the plate thickness of soft magnetic alloy strip 22 is 0.02 mm to 0.06 mm.

There are many cases where a deviation of the plate thickness is set within plus or minus several % of the plate thickness. Further, the surface of soft magnetic alloy strip 22 has minute irregularities of 1 pm or less. In addition, there is also case where the minute holes may penetrate in the plate thickness direction. Due to these circumstances, a gap of 0.0001 mm to 0.06 mm is present at least at a part between the layers of soft magnetic alloy strip 22 on the end surface of laminated group 3 of the soft magnetic alloy strips.

An example of the end surface different from the end surface illustrated in FIGS. 7A and 7B will be described with reference to FIG. 8. FIG. 8 is a sectional view illustrating an example of a part of the end surface of laminated group 3 of the soft magnetic alloy strips after the fastening step.

As illustrated in FIG. 8, in a case where soft magnetic alloy strip 24 having a chipped end part is present in the plurality of soft magnetic alloy strips 22, gap 25 is generated on the end surface. The maximum gap that appears on the end surface is equivalent to the plate thickness. However, as illustrated in FIG. 8, in a case where the end parts of each of the soft magnetic alloy strips above and below gap 25 are tilted toward gap 25, gap 25 that appears on the end surface becomes narrower than the plate thickness of soft magnetic alloy strip 22.

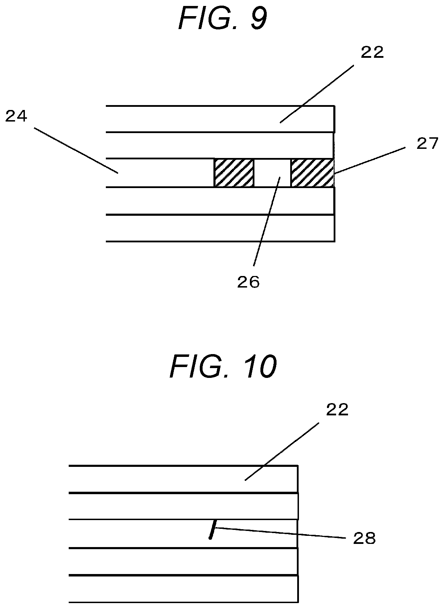

Further, another example of the end surface will be described with reference to FIG. 9. FIG. 9 is a sectional view illustrating an example of a part of the end surface of laminated group 3 of the soft magnetic alloy strips after the fastening step.

In the example of FIG. 9, fragment 26 is present in gap 27 between soft magnetic alloy strip 24 having a chipped end part and the laminated end surface (the rightmost surface in the drawing). Fragment 26 is, for example, one that has not been removed by the removal step.

Even when fragment 26 that has not been removed in the removal step is present, since the compressive force acts in the laminating direction in the following fastening step, the possibility that fragment 26 falls off from the laminated end surface is substantially low.

Further, when the removal step is performed after the fastening step as described above, the possibility that fragment 26 falls off from the laminated end surface is further reduced.

Further, another example of the end surface will be described with reference to FIG. 10. FIG. 10 is a sectional view illustrating an example of a part of the end surface of laminated group 3 of the soft magnetic alloy strips after the fastening step.

In the example of FIG. 10, crack 28 is present in one of the plurality of soft magnetic alloy strips 22.

Even when crack 28 or split are present in soft magnetic alloy strip 22, the compressive force acts in the laminating direction in the fastening step, and thus deterioration of crack 28 or split can be suppressed. Accordingly, the possibility that the fragments generated by crack 28 or split fall off from the laminated end surface is low.

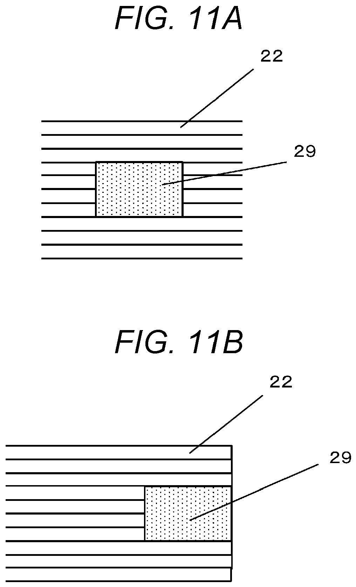

Further, another example of the end surface will be described with reference to FIGS. 11A and 11B. FIG. 11A is a front view illustrating an example of a part of the end surface of laminated group 3 of the soft magnetic alloy strips after the fastening step. FIG. 11B is a sectional view of FIG. 11A.

Soft magnetic alloy strip 22 becomes brittle while being hardened by heat treatment. Accordingly, in a case where an object harder than soft magnetic alloy strip 22 hits the end surface of laminated group 3 of the soft magnetic alloy strips during the manufacturing process of stator 100, for example, as illustrated in FIGS. 11A and 11B, there is a case where missing part 29 over a plurality of layers of soft magnetic alloy strip 22 occurs.

There is a case where powder or fragments remains in missing part 29. Among these foreign matters, those that easily fall off from the laminated end surface are removed by the above-described removal step. Damage on the surface of missing part 29 is unlikely to proceed.

Although FIGS. 11A and 11B illustrate a case where the boundary between the layers of soft magnetic alloy strip 22 is clear in missing part 29, there can also be a case where the boundary may be unclear.

### <Motor>

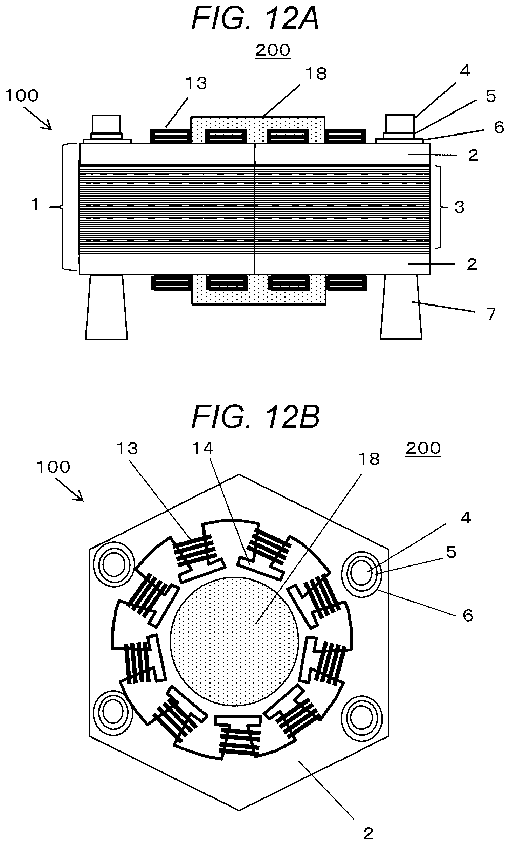

Motor 200 using stator 100 described above will be described with reference to FIGS. 12A and 12B. FIG. 12A is a side view of motor 200 using stator 100. FIG. 12B is a top view of FIG. 12A.

As illustrated in FIGS. 12A and 12B, motor 200 is completed by providing rotor 18 inside teeth 14 with respect to stator 100 produced by the series of manufacturing process described above. In motor 200, when winding 13 is energized, rotor 18 is rotationally driven.

In the present exemplary embodiment, a case where rotor 18 is provided on the inner diameter side of stator 100 has been described as an example, but rotor 18 may be provided on the outer peripheral side of stator 100.

As described above, in the method of manufacturing stator 100 of the present exemplary embodiment, first, the adjustment step of adjusting the thickness of laminated body 1 including laminated group 3 of soft magnetic alloy strips containing, in whole or in part, soft magnetic alloy strips 22 obtained by heat-treating amorphous alloy strips and metal plates (for example electromagnetic steel sheets 2),the metal plates sandwiching laminated group 3 of soft magnetic alloy strips, is performed.

Next, the winding step of performing winding in the laminating direction at a predetermined position of laminated body 1 by fastening laminated body 1 to the base (for example, leg 7 of the base), is performed.

Next, the removal step of removing the foreign matters from the end surface of laminated body 1 by releasing the fixing of laminated body 1 to the base, is performed.

Next, the fastening step of fastening laminated body 1 to the base again, is performed. The stator is produced by these steps. A motor is produced using the stator.

Accordingly, it is possible to prevent fragments or the like of the soft magnetic alloy strips from falling off from the end surface of the laminated body. Therefore, the characteristics and reliability of the motor can be ensured.

### (Second Exemplary Embodiment)

A second exemplary embodiment according to the present disclosure will be described.

### <Structure of Stator>

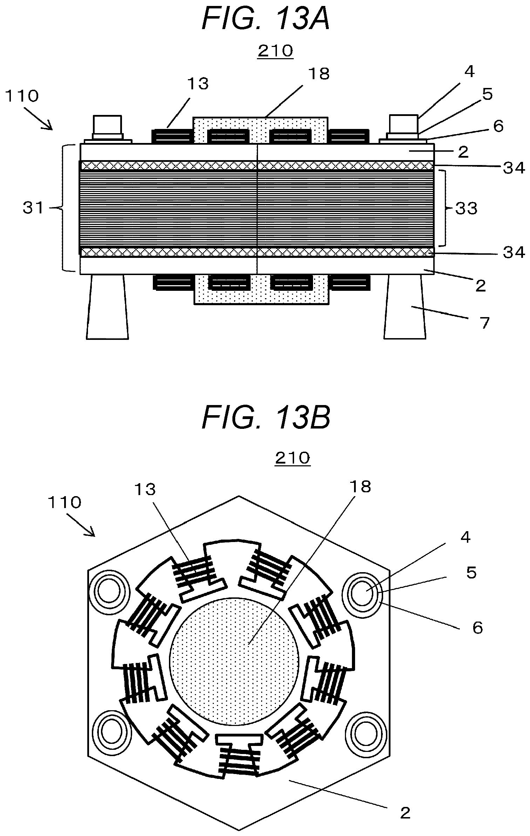

A structure of stator 110 according to the present exemplary embodiment will be described with reference to FIGS. 13A and 13B. FIG. 13A is a side view of motor 210 of the present exemplary embodiment. FIG. 13B is a top view of FIG. 13A.

Motor 210 illustrated in FIGS. 13A and 13B is the same as motor 200 of the first exemplary embodiment illustrated in FIGS. 12A and 12B, except that the structure of laminated body 31 is different.

As illustrated in FIGS. 13A and 13B, laminated body 31 of the present exemplary embodiment includes laminated group 34 of soft magnetic alloy strips which are not heat-treated between laminated group 33 of the heat-treated soft magnetic alloy strips and electromagnetic steel sheet 2.

The appearance of the soft magnetic amorphous alloy strips that are not heat-treated has a clear metallic luster. Meanwhile, the heat-treated soft magnetic alloy strip has a weak metallic luster due to being colored. Accordingly, it is possible to easily distinguish laminated group 33 of heat-treated soft magnetic alloy strips and laminated group 34 of soft magnetic alloy strips.

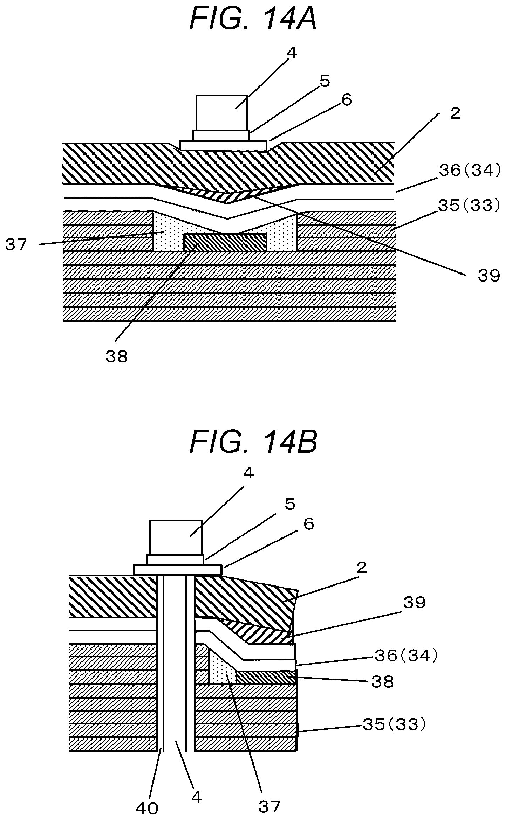

Next, the structure of the vicinity of the fastener (a part where bolt 4 is provided) of stator 110 described above will be described with reference to FIGS. 14A and 14B. FIG. 14A is a front view of the vicinity of the fastener of stator 110. FIG. 14B is a sectional view of FIG. 14A.

Laminated group 34 of the soft magnetic alloy strips that are not heat-treated as illustrated in FIG. 13A includes two soft magnetic amorphous alloy strips 36 that are not heat-treated as illustrated in FIGS. 14A and 14B.

Laminated group 33 of the heat-treated soft magnetic alloy strips illustrated in FIG. 13A includes a plurality of soft magnetic alloy strips 35 illustrated in FIGS. 14A and 14B. Soft magnetic alloy strip 35 is a heat-treated soft magnetic alloy strip.

As illustrated in FIGS. 14A and 14B, bolt 4 is inserted into spring washer 5, washer 6, and through-hole 40. By fastening bolts 4, laminated body 31 illustrated in FIG. 13A is tightened in the laminating direction.

At this time, the tightening force that acts on laminated group 34 of the soft magnetic alloy strips that are not heat-treated is the strongest immediately below electromagnetic steel sheet 2. Here, since soft magnetic amorphous alloy strip 36 has high ductility, damage does not easily occur. Therefore, as illustrated in FIGS. 14A and 14B, it is preferable to arrange soft magnetic amorphous alloy strips 36 immediately below electromagnetic steel sheet 2. In other words, soft magnetic amorphous alloy strip 36 is preferably provided so as to be in contact with electromagnetic steel sheet 2.

In the examples of FIGS. 14A and 14B, a case where there is gap 37 in laminated group 33 of the soft magnetic alloy strips obtained by heat-treating soft magnetic alloy strips 35 and fragment 38 of the soft magnetic alloy strips remains in gap 37, is illustrated. In this case, as illustrated in FIGS. 14A and 14B, soft magnetic amorphous alloy strip 36 is also deformed according to the deformation of the end portion of electromagnetic steel sheet 2. Accordingly, fragment 38 is pressed and restrained from the upper side in the drawing.

When fragment 38 remains after the removal step (removal work by air or magnet), fragment 38 receives the compressive force in the laminating direction in the fastening step, and thus, the possibility that the fragment falls off due to the drive of the motor is low.

Although the size of gap 37 should also be considered, as illustrated in FIGS. 14A and 14B, there is also a case where gap 39 remains between electromagnetic steel sheet 2 and soft magnetic amorphous alloy strip 36.

The number of soft magnetic amorphous alloy strips 36 that form laminated group 34 of the soft magnetic alloy strips that are not heat-treated may be one. Soft magnetic amorphous alloy strip 36 can act a role of a cushioning material against the damage even when being at a position (for example, a position in laminated group 33 of the heat-treated soft magnetic alloy strips) other than the position immediately below or above electromagnetic steel sheet 2.

The present disclosure is not limited to the description of each of the above-described exemplary embodiments, and various modifications can be made without departing from the spirit of the present disclosure.

### INDUSTRIAL APPLICABILITY

According to the method of manufacturing a stator, the stator, and the motor of the present disclosure, the characteristics and reliability of the motor can be ensured. Furthermore, the stator of the present disclosure can be applied not only to motors but also to applications of magnetically applied electronic components such as transformers.

### REFERENCE MARKS IN THE DRAWINGS

1 LAMINATED BODY
2 ELECTROMAGNETIC STEEL SHEET
3 LAMINATED GROUP OF SOFT MAGNETIC ALLOY STRIPS
4 BOLT
5 SPRING WASHER
6 WASHER
7 LEG OF BASE
8 MAXIMUM LAMINATED THICKNESS PART
9 MINIMUM LAMINATED THICKNESS PART
10 PLUS OR MINUS
11 END PART
12 GAP
13 WINDING
14 TEETH
15 NOZZLE
16 AIR
17 FASTENING HOLE
18 ROTOR
22 SOFT MAGNETIC ALLOY STRIP
22a SOFT MAGNETIC ALLOY STRIP
22b SOFT MAGNETIC ALLOY STRIP
23 GAP
24 SOFT MAGNETIC ALLOY STRIP
25 GAP
26 FRAGMENT
27 GAP
28 CRACK
29 MISSING PART
31 LAMINATED BODY
33 LAMINATED GROUP OF HEAT-TREATED SOFT MAGNETIC ALLOY STRIPS
34 LAMINATED GROUP OF SOFT MAGNETIC ALLOY STRIPS THAT ARE NOT HEAT-TREATED
35 SOFT MAGNETIC ALLOY STRIP
36 SOFT MAGNETIC AMORPHOUS ALLOY STRIP
37 GAP
38 FRAGMENT
39 GAP
40 THROUGH-HOLE
41 LAMINATED GROUP OF SOFT MAGNETIC ALLOY STRIPS
42 BOLT
43 WASHER
44 LEG OF BASE
45 THROUGH-HOLE
46 SOFT MAGNETIC ALLOY STRIP
47 DEFORMED PART
48 GAP
100 STATOR
110 STATOR
200 MOTOR
210 MOTOR

## Claims

1. A method of manufacturing a stator, comprising:
an adjustment step of adjusting a thickness of a laminated body including a laminated group of soft magnetic alloy strips containing, in whole or in part, the soft magnetic alloy strips obtained by heat-treating amorphous alloy strips and metal plates, the metal plates sandwiching the laminated group;
a winding step of fastening the laminated body to a base and performing winding at a predetermined position of the laminated body in a laminating direction;
a removal step of releasing the fastening of the laminated body to the base and removing foreign matters from an end surface of the laminated body; and
a fastening step of fastening the laminated body to the base again.

2. The method of Claim 1, further comprising:
Removing foreign matters from the end surface of the laminated body after the fastening step.

3. The method of Claim 1 or 2, further comprising:
Removing foreign matters the end surface of the laminated body before the winding step.

4. The method of any one of Claims 1 to 3,
wherein a method of the removing the foreign matters from the end surface of the laminated body is a non-contact type removing method.

5. The method of Claim 4,
wherein the non-contact type removing method is air blowing.

6. The method of Claim 4,
wherein the non-contact type removing method is air suctioning.

7. The method of Claim 4,
wherein the non-contact type removing method is attraction by a magnet.

8. A stator comprising:
a laminated group of soft magnetic alloy strips containing, in whole or in part, soft magnetic alloy strips obtained by heat-treating amorphous alloy strips;
metal plates that sandwich the laminated group;
a winding wound in a laminating direction at a predetermined position of the laminated body including the laminated group and the metal plates;
a base that holds the laminated body; and
a fastening mechanism that penetrates the laminated body in the laminating direction and fastens the base and the laminated body.

9. The stator of Claim 8,
wherein a space factor, which is a proportion of the soft magnetic alloy strips occupying the laminated group, is 83% to 99%.

10. The stator of Claim 8 or 9,
wherein the laminated group includes heat-treated soft magnetic alloy strips and soft magnetic alloy strips that are not heat-treated.

11. The stator of Claim 10,
wherein the soft magnetic alloy strips that are not heat-treated are provided so as to be in contact with the metal plate.

12. The stator of any one of Claims 8 to 11,
wherein the metal plate is an electromagnetic steel sheet.

13. The stator of any one of Claims 8 to 12,
wherein a thickness of the laminated body is within plus or minus 10% of a preset value.

14. A motor comprising:
the stator according to any one of Claims 8 to 13; and
a rotor.
